# EUROPEAN PATENT APPLICATION

(11) **EP 1 749 841 A1**
(43) Date of publication of application: **07.02.2007**
(21) Application number: 05291668.1
(22) Date of filing: 03.08.2005
(51) Int. Cl.: C08F 10/00, C08F 4/02

(54) **Activating fluorinated supports with iron-based post-metallocene complexes**

(71) Applicant: TOTAL PETROCHEMICALS RESEARCH FELUY, 7181 Seneffe (Feluy) (BE); Centre National de la Recherche Scientifique (CNRS), 75016 Paris (FR)
(72) Inventor: Prades, Floran, 1400 Nivelles (BE); Boisson, Christophe, 69100 Villeurbanne (FR); Razavi, Abbas, 7000 Mons (BE); Spitz, Roger, 69006 Lyon (FR); Sirol, Sabine, 1440 Wauthier-Braine (BE)
(74) Representative: Roufosse, Micheline C.

(57) **Abstract**

The present invention discloses an active supported catalyst system comprising:
a) an iron-based post-metallocene catalyst component;
b) an alkylating agent;
c) an activating functionalised and fluorinated support.

It also discloses a method for preparing said active supported catalyst system and its use in the polymerisation of olefins.

## Description

This invention relates to the field of olefin polymerisation with iron-based post-metallocene complexes supported on activating support.

It is known in the art that mono-1-olefins, such as ethylene and propylene, can be polymerised with catalyst system employing transition metals such as titanium, vanadium, chromium, nickel and/or other metals, either unsupported or on a support such as alumina, silica, titania, and other refractory metals. Supported polymerization catalyst systems frequently are used with a cocatalyst, such as alkyl boron compounds and/or alkyl aluminum compounds and/or alkyl aluminoxy compounds. Organometallic catalyst systems or Ziegler-Natta-type catalyst systems, usually are unsupported and frequently are used with a cocatalyst, such as methylaluminoxane. Other components may be used in addition to the catalyst and cocatalyst.

It is also well known that, while no polymer production process is easy, slurry, or loop, polymerization processes are more commercially desirable than other polymerization processes, due to ease of operation. Furthermore, the type of polymerization process used can have an effect on the resultant polymer. For example, high reactor temperatures can result in low catalyst activity and productivity, as well as a low molecular weight polymer product. High reactor pressures also can decrease the amount of desirable branching in the resultant polymer.

Most polymer products made using slurry processes, especially polymer products made using supported chromium catalyst systems, have a broad molecular weight distribution and, therefore, the polymer product is very easy to process into a final product. Polymers made by other processes, such as, for example, high temperature and/or high pressure solution processes, can produce polymers having a narrow molecular weight distribution; these polymers can be very difficult to process into an article of manufacture.

Many homogeneous organometallic catalyst systems have low activity, high consumption of very costly cocatalysts like methylaluminoxane (MAO), and can produce low molecular weight polymers with a narrow molecular weight distribution. Furthermore, even though MAO can be helpful or even necessary to produce a polymer with desired characteristics, an excess of MAO can result in decreased catalyst system activity. Additionally, these types of homogeneous catalyst systems preferably are used only in solution or gas phase polymerisation processes.

US-A-5,852,145 discloses polymerisation processes for olefins using catalyst systems containing a nickel or palladium alpha-diimine complex, a metal containing hydrocarbylation compound, and a selected Lewis acid. The metal containing hydrocarbylation compound was defined as a compound that could transfer a hydrocarbyl group to a nickel or palladium compound. The patent disclosed that useful alkylating agents (defined as a form of metal containing hydrocarbylation compound) could be represented by formulas MX₂Rₙ⁶ or [Al(O)R¹¹]_{q}, that included alkylaluminium and alkylzinc compounds with or without halogen groups, as well as alkyl aluminoxanes. In that patent, the selected Lewis acids were referred to as compound (II) and it was additionally specified that when the hydrocarbylation compound was not an alkylaluminium compound containing one or more halogen atoms bound to an alumiium atom or an alkyl aluminoxane, compound (II) was compulsory.

US-A-6583235 discloses the use of aluminophosphate in catalyst systems comprising nickel and palladium catalysts and metal alkyl cocatalysts.

DE-A-19959251 discloses active catalyst systems based on group 8, 9, 10 metal complexes.

Diimine nickel dihalide complexes suitable for the homo- or copolymerisation of ethylene are disclosed in EP-A-884331.

US-A-4,716,208 also discloses a broad variety of late transition metal complexes that are suitable for the polymerisation of olefins and more particularly, Ittel et al. (Ittel S.D., Johnson L.K. and Brookhart M.; in Chem. Rev., 100, 1169, 2000.) disclose late-metal catalysts that can be used in the homo- and copolymerisation of ethylene.

All these catalyst components suffer from the disadvantage that they must be used with activating agents, more preferably with aluminoxane in order to become suitable for polymerising olefins.

It is known to use activating supports with metallocene catalyst components such as disclosed for example in FR-2769245. It is however not possible to control the distribution of fluor on these activating supports.

There is thus a need to prepare active catalyst systems based on transition metal complexes that require no aluminoxane and are simple to prepare.

It is an aim of the present invention to prepare active catalyst system produced with iron-based post-metallocene complexes wherein the acivation step is provided by an activating support.

It is a further aim of the present invention to prepare polyolefin having a good morphology.

Accordingly, the present invention discloses a catalyst system comprising:
a) a metal-based catalyst component of general formula (I)

   (L)ₙFe(Q)ₚ (I)

   wherein L is a ligand bound by at least 2 hetero-atoms to the metal and forming an inorganic complex with iron; n is an integer of 1, 2, or 3; each Q is independently a hydrocarbon having 1-20 carbon atoms or a halogen and p is the valence of Fe minus the sum of the coordination numbers of L.
b) an organo-metallic compound having at least one metal-carbon bond;
c) an activating functionalised and fluorinated support.

The hetero-atom is selected from group 15 of the periodic Table, preferably, it is selected from N, O, P, S, more preferably it is N or O.

In a preferred embodiment according to the present invention the metal-based component can be represented by formula II 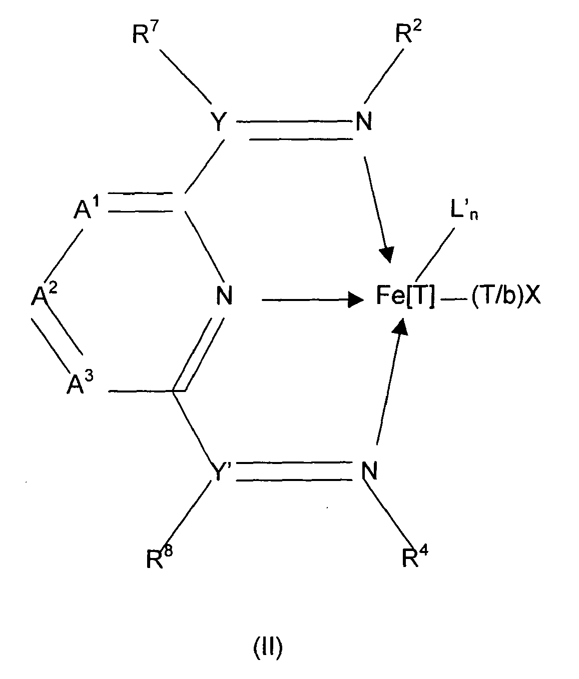 wherein X represents an atom or group covalently or ionically bound to iron;
wherein L' is a group datively bound to iron;
wherein n is an integer from 0 to ??.
wherein T is the oxidation state of the transition metal and b is the valence of the atom or group X;
wherein Y' is C or P(R³);
wherein A¹, A² and A³ are each independently N, P or CR⁹ with the proviso that at least one is CR⁹;
wherein R², R⁴ R³, R⁷, R⁸ and R⁹ are each independently selected from hydrogen, halogen, substituted or unsubstituted hydrocarbyl, substituted or unsubstituted heterohydrocarbyl or SiR'₃ wherein R' is independently selected from hydrogen, halogen, substituted or unsubstituted hydrocarbyl, substituted or unsubstituted heterohydrocarbyl.

Preferably, Y is C. Preferably A¹ to A³ are each independently CR⁹, or A¹ and A³ are both N and A2 is CR⁹, or one of A¹ or A³ is N and the other two are independently CR⁹.

Preferably, R² and R⁴ are independently selected from substituted or unsubstituted alicyclic, heterocyclic or aromatic groups such as for example phenyl, 1-naphtyl, 2-naphtyl, 2-methylphenyl, 2-ethylphenyl, 2,6-diisopropylphenyl, 2,3-diisopropylphenyl, 2,4-diisopropylphenyl, 2,6-di-n-butylphenyl, 2,6-dimethylphenyl, 2,6-dimethylphenyl, 2,6-dimethylphenyl, 2-di-t-butylphenyl, 2,6-diphenylphenyl, 2,4,6-trimethylphenyl, 2,6-trifluoromethylphenyl, 4-bromo-2,6-dimethylphenyl, 3,5-dichloro-2,6-diethylphenyl, 2,6-bis(2,6-dimethylphenyl)phenyl, cyclohexyl, pyrolyl, 2,5-dimethylpyrolyl and pyridinyl.

In another embodiment according to the present invention, the post-metallocene complex can be represented by formula IIIa, IIIb or IIIc

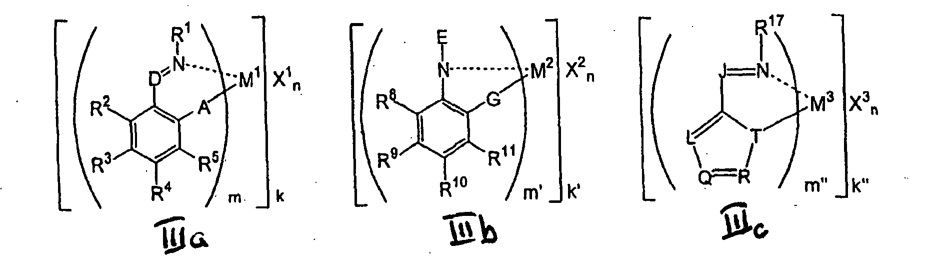

Wherein all symbols are as in EP-A-1238989 from page 4, line 32 to page 9, line 17.

The post-metallocene metal complex or a combination of metallocene and/or post-metallocene complexes is/are deposited on and reacted with an activating support, wherein said activating support is prepared by the steps of:
a) providing a support prepared from one or more porous mineral oxides;
b) optionally heating the support under inert gas;
c) functionalising the support with a solution containing an alkylating agent;
d) fluorinaing the support with a solution containing a fluorinating agent;
e) retrieving an active fluorinated support.

Optionally the functionalisation and the fluorination can be carried out in one step, by providing an appropriate solution containing a functionalising and fluorinating agent.

The porous mineral oxide is advantageously chosen from silica, alumina and mixtures thereof. Preferably it is silica.

The porous mineral oxide particles preferably have at least one of the following characteristics:
- they include pores having a diameter ranging from 7.5 to 30 nm;
- they have a porosity ranging from 1 to 4 cm³ /g;
- they have a specific surface area ranging from 100 to 1000 m² /g; and
- they have an average diameter ranging from 1 to 100 µm.

Before it is functionalised, the support has --OH radicals on its surface, in particular from 0.25 to 10, and even more preferably from 0.5 to 4 --OH radicals, per nm² resulting either from a thermal treatment under inert gas at a temperature of from 100 to 1000 °C, preferably at a temperature of from 120 to 800 °C and more preferably at a temperature of from 140 to 700 °C, during at least 60 minutes or from a chemical treatment. After it has been functionalised, said support has as many at least partially fluorinated aluminium and/or magnesium Lewis-acid sites per nm².

The support may be of various kinds. Depending on its nature, its state of hydration and its ability to retain water, it may undergo dehydration treatments of greater or lesser intensity depending on the desired surface content of --OH radicals.

Those skilled in the art may determine, by routine tests, the dehydration treatment that should be applied to the support that they have chosen, depending on the desired surface content of --OH radicals.

More preferably, the starting support is made of silica. Typically, the silica may be heated between 100 and 1000 ° C, preferably between 120 and 800 ° C, more preferably between 140 and 700 °C under an inert gas atmosphere, such as for example under nitrogen or argon, at atmospheric pressure or under a vacuum of about 10⁻⁵ bars, for at least 60 minutes. For such heat treatment, the silica may be mixed, for example, with NH₄Cl so as to accelerate the dehydration.

Alternatively, the heat treatment can be carried out at a temperature of from 100 to 450 ° C, in combination with a silanisation treatment. This results in a species derived from silicon being grafted on the surface of the support thereby making said surface more hydrophobic.

The silane may, for example, be an alkoxytrialkylsilane, such as for example methoxytrimethylsilane, or a trialkylchlorosilane, such as for example trimethylchlorosilalne or triethylchlorosilane. It is typically applied to the support by forming a suspension of this support in an organic silane solution, said silane solution having a concentration of between 0.1 and 10 mol per mole of OH radicals on the support. The solvent for this solution may be chosen from linear or branched aliphatic hydrocarbons, such as hexane or heptane, alicyclic hydrocarbons, optionally substituted, such as cyclohexane, and aromatic hydrocarbons, such as toluene, benzene or xylene. The treatment of the support by the silane solution is generally carried out under stirring at a temperature of from 50 to 150 ° C, during 1 to 48 hours.

After silanisation, the solvent is removed, for example, by siphoning or filtration, and the support is then being washed thoroughly, using for example 0.3 I of solvent per gram of support.

The surface --OH radical content of the support may be assayed using known techniques such as, for example, by reacting an organomagnesium compound such as CH₃ Mgl with the support and by measuring the amount of methane given off as described in McDaniel (McDaniel M.P., in J. Catal., 67, 71,1981) or by reacting triethylaluminium with the support and by measuring the amount of ethane given off as described by Gachard-Pasquet (Thesis of Veronique Gachard-Pasquet, Universite Claude Bernard, Lyon 1, France, pages 221-224, 1985).

In a first embodiment according to the present invention, functionalisation and fluorination are carried out as two separate steps. The activating supports are then formed by the reaction of --OH radicals carried by the support base particles with at least one functionalisation agent. Any functionalisation agent or mixture thereof described in FR -2,769,245 from page 5, line 9 to page 6, line 11 can be used in the present invention.

In a preferred embodiment of the present invention, the functionalisation step is carried out by treating a suspension of the support particles in a solvent medium containing the functionalisation agent at a temperature ranging from -150 to +150 ° C for a period of time ranging from 1 minute to 12 hours, and then by recovering the grafted particles after washing. The solvent is preferably selected from aliphatic, alicyclic and aromatic hydrocarbons. Preferably, the treatment is carried out at a temperature of from 30 to 100 °C and for a period of time of from 1 to 3 hours. Preferably the concentration of functionalisation agent is of from 0.5 to 20 mmol per g of support particles.

The functionalised support is then treated with a fluorinating agent that partially replaces the radicals of the functionalising agent with fluor. The functionalised support particles may then be brought into contact with gaseous hydrofluoric acid in order to carry out the fluorination treatment. This contacting step is carried out for a period of time ranging from 1 minute to 24 hours, at a temperature of from 20 to 800 °C. Alternatively, hydrofluoric acid may advantageously be replaced by powdered (NH₄)₂SiF₆; the fluorination treatment with (NH₄)₂ SiFₛ is carried out by gently fluidising the mixture of support particles and (NH₄)₂ SiF₆ under an inert gas, such as argon or nitrogen, and by submitting to a heat treatment at a temperature of from 300 to 500 ° C for a period of time of from 1 to 10 hours. An amount of fluorine of from 1 to 6% by weight, preferably of from 3 to 5% by weight based on the total weight of the support is used for the fluorination treatment.

In a second embodiment according to the present invention, the fluorinating step is suppressed and the support is treated with a compound comprising at least one aluminium, one fluor and one organic group, optionally in combination with any one or more compounds selected from MF, MR², M'F₂, M'R²F, or M'R²₂ wherein M is a group 1 metal, M' is a group 2 metal and R² is an alkyl having from 1 to 20 carbon atoms. The organic group is preferably an hydrocarbyl and more preferably an alkyl having from 1 to 12 carbon atoms. Preferably, the functionalisation and fluoriding agent is of formula III

Al (R)₂F (III)

wherein the R' groups, can be the same or different and are alkyl groups having from 1 to 20 carbon atoms. Preferably, R' is methyl, ethyl, butyl and hexyl, and more preferably the R¹ groups are the same. The most preferred compound of formula (VI) is diethylaluminiumfluoride.

The functionalisation agent can be used alone or in combination with any one or more groups selected from M'F, M'R^{"}, M"F₂, M"R^{"}F or M"R^{"}₂ wherein M' is a group 1 metal, preferably Na, M" is a group 2 metal, preferably Mg and R is an alkyl having from 1 to 20 carbon atoms.

The one or more iron-based post-metallocene catalyst component as described in formula I, or formula II, or formula III are impregnated on and reacted with the activating support.

The nature, the size and the position of the substituents determine the structure of the polymer: they are thus selected according to the desired properties and structure of the resulting polymer. The polymer obtained may be isotactic or syndiotactic depending upon the nature and position of the substituents.

In the present invention, an alkylation step must be carried out with an organo-metallic compound that is able to alkylate the complex without activating it The alkylating agent is an organometallic compound or a mixture thereof that is able to transform a metal-L group bond into a metal-carbon bond or a metal-hydrogen bond. It can be selected from an alkylated derivative of Al, Li or Mg or Zn. Preferably, it is selected from an alkylated derivative of aluminium of formula (IV)

AIR^{m}ₙX'₃₋ₙ (IV)

wherein the R^{m} groups, may be the same or different, and are a substituted or unsubstituted alkyl, containing from 1 to 12 carbon atoms such as for example ethyl, isobutyl, n-hexyl and n-octyl, X' is a halogen or hydrogen and n is an integer from 1 to 3, with the restriction that at least one R^{m} group is an alkyl. It can also be any organometallic compound able to create a metal-carbon bond provided it does not interfere with the activity of the final catalytic system.

Preferably, the alkylating agent is an aluminium alkyl, and more preferably it is triisobutylaluminium (TIBAL) or triethylaluminium (TEAL).

Alternatively, the alkylating agent is diethyl zinc.

The activating functionalised support, the alkylating agent and the iron-based post-metallocene complex are added, in any order, to prepare an active catalyst system.

In one embodiment according to the present invention, the alkylating agent is first added to the activating functionalised support. The post-metallocene complex is then dissolved in an aromatic solvent and added to the treated support.

In another embodiment according to the present invention, the alkylating agent is mixed with the post-metallocene complex and the mixture is added to the activating support.

The amount of alkylating agent is variable and the ratio Al/M is of from 1 to 10000. The amount of activating support is of from 0.01 to 2000 mg of support per micromole of iron-based post-metallocene complex.

The active catalyst system according to the present invention is used for the homo- or co-polymerisation of ethylene and alpha-olefins.

The monomers that can be used in the present invention are alpha-olefins or ethylene, preferably ethylene and propylene. The preferred comonomer, if present, is hexene

The polymerisation conditions are not particularly limited and depend upon the monomer and the late transition metal complex. The polymerisation temperature is typically of from 0 to 80 °C, preferably it is room temperature (about 25 °C) and the pressure defined as the monomer pressure can be from atmospheric up to 100 bars, preferably between 3 and 50 bars.

Hydrogen may be added to the system in order to control the chain length.

When compared to homogeneous polymerisation, the catalyst system of the present invention has the great advantage of leaving the reactor clean.

## Claims

1. An active supported catalyst system comprising:
a) a metal-based catalyst component of general formula (I)
(L)ₙFe(Q)ₚ (I)
wherein L is a ligand bound by at least 2 hetero-atoms to the metal M and forming with said metal an inorganic complex; n is an integer of 1, 2, or 3; each Q is independently a hydrocarbon having 1-20 carbon atoms or a halogen and p is the valence of M minus the sum of the coordination numbers of L.
b) an alkylating agent selected from an organo-metallic compound having at least one carbon-metal bond;
c) an activating functionalised and fluorinated support.

2. The active supported catalyst system of claim 1 wherein the metal complex is of formula II 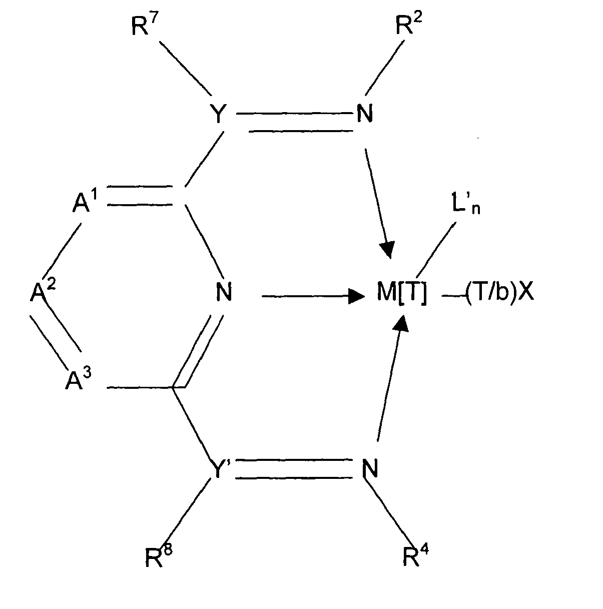 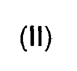 wherein X represents an atom or group covalently or ionically bound to iron;
wherein L' is a group datively bound to iron;
wherein n is an integer
wherein T is the oxidation state of the transition metal and b is the valence of the atom or group X;
wherein Y' is C or P(R³);
wherein A¹, A²and A³ are each independently N, P or CR⁹ with the proviso that at least one is CR⁹;
wherein R², R⁴ R³, R⁷, R⁸ and R⁹ are each independently selected from hydrogen, halogen, substituted or unsubstituted hydrocarbyl, substituted or unsubstituted heterohydrocarbyl or SiR'₃ wherein R' is independently selected from hydrogen, halogen, substituted or unsubstituted hydrocarbyl, substituted or unsubstituted heterohydrocarbyl.

3. The active supported catalyst system of claim 1 or claim 2 wherein Y is C.

4. The active supported catalyst system of any one of claims 1 to 3 wherein R² and R⁴ are each independently selected from substituted or unsubstituted alicyclic, heterocyclic or aromatic groups.

5. The active supported catalyst system of claim 1 wherein the metal complex is of formula IIIa, IIIb or IIIc.

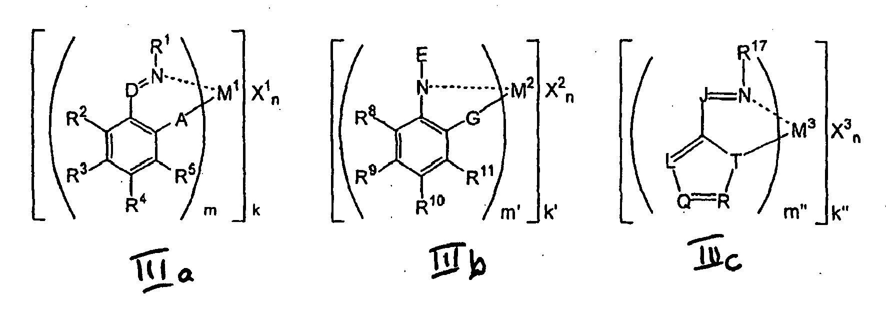

6. The active supported catalyst system of any one of claims 1 to 5 wherein the activating support is prepared by the steps of:
a) providing a support prepared from one or more porous mineral oxides;
b) optionally heating the support under inert gas;
c) functionalising the support with a solution containing an alkylating agent;
d) fluorinating the support with a solution containing a fluorinating agent;
e) retrieving an active fluorinated support.

7. The active supported catalyst system of claim 6 wherein the functionalisation and fluorination steps are carried out in one step with an agent containing at least one aluminium, one fluor and an organic group.

8. The active supported catalyst system of claim 6 wherein the functionalisation agent is Al(R')₂F, wherein the R' groups can be the same or different and are alkyl groups having from 1 to 20 carbon atoms.

9. The active supported catalyst system of any one of claims 1 to 8 wherein the alkylating agent is aluminium alkyl or diethyl zinc.

10. A method for preparing the active supported catalyst system of any one of claims 1 to 9 that comprises the steps of:
a) providing a functionalised and fluorinated activating support as prepared in any one of claims 6 to 8;
b) providing an alkylating agent;
c) providing a solution comprising at least one post-metallocene component of any one of claims 1 to 5 in a solvent;
d) adding the compounds of steps b) and c) either simultaneously or sequentially in any order to the support of step a);
e) retrieving an active supported catalyst system.

11. A method for homo- or co-polymerising olefins that comprises the steps of:
a) providing the active supported catalyst system of any one of claims 1 to 9;
b) injecting one or more monomers in the reacting zone;
c) maintaining under polymerisation conditions;
d) retrieving a polymer.

12. The method of claim 11 wherein the monomer is ethylene or propylene.

13. Polymer obtainable by the process of claims 11 or claim 12.
